# EUROPÄISCHE PATENTANMELDUNG

(11) **EP 1 533 152 A1**
(43) Veröffentlichungstag der Anmeldung: **25.05.2005**
(21) Anmeldenummer: 03292911.9
(22) Anmeldetag: 21.11.2003
(51) Int. Cl.: B60H 1/00

(54) **Klimaanlage, insbesondere für ein Kraftfahrzeug**

(71) Anmelder: Behr France S.A.R.L., 68250 Rouffach (FR)
(72) Erfinder: Peter, Vincent, 68190 Ensisheim (FR)
(74) Vertreter: Grauel, Andreas, Dr.

(57) **Zusammenfassung**

Die Erfindung betrifft eine Klimaanlage (1 ), insbesondere für ein Kraftfahrzeug, mit einem Luftkanal-System (2), das eine Mehrzahl von Luftkanälen (4) aufweist, wobei die Luftkanäle (4) isolierend ausgebildet oder mit einer Isolierung versehen sind.

## Beschreibung

Die Erfindung betrifft eine Klimaanlage, insbesondere für ein Kraftfahrzeug, gemäß dem Oberbegriff des Anspruchs 1.

Bei bekannten Klimaanlagen für ein Kraftfahrzeug sind in der Regel Luftkanäle aus Kunststoff vorgesehen, welche die temperierte Luft von der Klimaanlage zum Fahrzeuginnenraum führen. Bei größeren Kraftfahrzeugen sind hierbei häufig zwei Klimaanlagen vorgesehen, um eine ausreichende Temperierung zu erreichen. Dabei erhöht die zweite Klimaanlage die Kosten deutlich.

Es ist Aufgabe der Erfindung, eine verbesserte Klimaanlage zur Verfügung zu stellen.

Diese Aufgabe wird gelöst durch eine Klimaanlage mit den Merkmalen des Anspruchs 1. Vorteilhafte Ausgestaltungen sind Gegenstand der Unteransprüche.

Erfindungsgemäß ist eine Klimaanlage vorgesehen, bei der die Luftkanäle ihres Luftkanal-Systems isolierend ausgebildet oder mit einer Isolierung versehen sind, so dass die Temperaturänderung in Folge der Umgebungstemperatur, insbesondere ein Temperaturanstieg von gekühlter Luft, minimiert und dadurch die Funktion der Klimaanlage verbessert werden kann. Auf Grund der verringerten Temperaturänderung ist auch für größere Fahrzeuge nur eine Klimaanlage nötig, so dass auf die zweite Klimaanlage, wobei es sich üblicherweise um eine Heckanlage handelt, verzichtet werden kann, da insbesondere der Fondbereich mit ausreichend temperierter Luft versorgt werden kann.

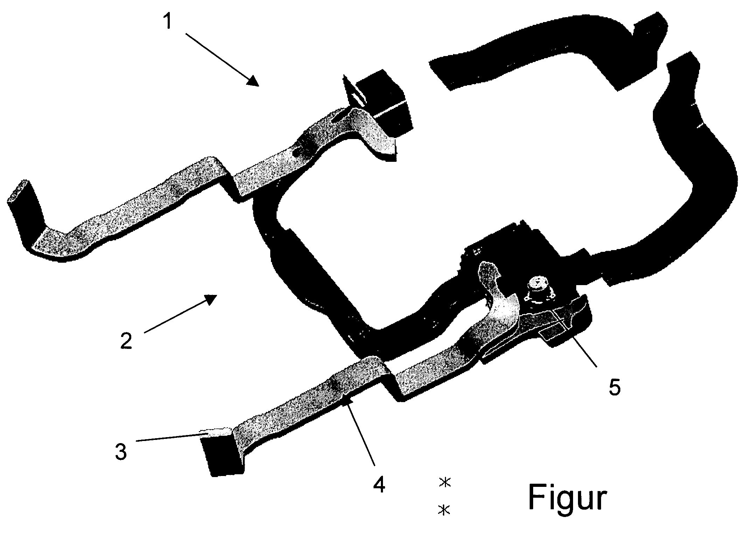

Im Folgenden wird die Erfindung anhand eines Ausführungsbeispiels unter Bezugnahme auf die Zeichnung im Einzelnen erläutert. Die einzige Figur der Zeichnung zeigt eine schematische Darstellung des Luftkanalverlaufs einer erfindungsgemäßen Klimaanlage.

Eine erfindungsgemäße Klimaanlage 1 weist ein Luftkanal-System 2 zur Leitung der Luft von dem temperierenden Teil der Klimaanlage 1 zu den einzelnen Luft-Ausströmdüsen 3 in den Fahrzeuginnenraum auf. Hierbei sind die Luftkanäle 4 des Luftkanal-Systems 2 isoliert ausgebildet, so dass der Temperaturanstieg bzw. -verlust minimiert werden kann.

Vorliegend sind die Luftkanäle 4 mit einer nachträglich angebrachten Isolierung (nicht dargestellt) versehen, jedoch können auch Luftkanäle verwendet werden, die auf Grund ihrer Ausgestaltung, bspw. auf Grund der Verwendung eines Verbundwerkstoffs, isolierend wirken.

Gemäß dem in der Figur dargestellten Ausführungsbeispiel ist lediglich ein Gebläse 5 vorgesehen, jedoch kann gemäß einer Variante ein oder mehrere Booster-Gebläse im Luftkanal-System 2 vorgesehen sein, um die Strömungsgeschwindigkeit der Luft zu erhöhen und dadurch die Verweildauer der Luft im Luftkanal-System 2 zu verringern, so dass im Falle einer durch die Klimaanlage 1 gekühlten Luft der Temperaturanstieg verringert werden kann.

## Patentansprüche

1. Klimaanlage, insbesondere für ein Kraftfahrzeug, mit einem Luftkanal-System (2), das eine Mehrzahl von Luftkanälen (4) aufweist, **dadurch gekennzeichnet, dass** die Luftkanäle (4) isolierend ausgebildet oder mit einer Isolierung versehen sind.

2. Klimaanlage nach Anspruch 1, **dadurch gekennzeichnet, dass** die Luftkanäle (4) derart ausgebildet sind, dass die Verweildauer der Luft in den Luftkanälen (4) minimiert wird.

3. Klimaanlage nach Anspruch 1 oder 2, **dadurch gekennzeichnet, dass** mindestens ein Booster-Gebläse vorgesehen ist.
